# EUROPÄISCHE PATENTSCHRIFT

(11) **EP 2 964 698 B1**
(45) Veröffentlichungstag und Bekanntmachung des Hinweises auf die Patenterteilung: **30.11.2022**
(21) Anmeldenummer: 14707327.4
(22) Anmeldetag: 27.02.2014
(51) Int. Cl.: C08K 5/5313, C08K 3/32, C08K 3/00, C08K 7/14, C08K 13/02, C08K 13/04, C08L 77/06, C08L 77/00, C08L 77/02, C08K 5/20, C08K 5/098, C08K 5/101

(54) **FLAMMHEMMENDE POLYAMIDZUSAMMENSETZUNG**
FLAME-RETARDANT POLYAMIDE COMPOSITION
COMPOSITION DE POLYAMIDE IGNIFUGE

(30) Priorität: 08.03.2013 DE 102013004046
(43) Veröffentlichungstag der Anmeldung: 13.01.2016
(73) Patentinhaber: Clariant International Ltd, 4132 Muttenz (CH)
(72) Erfinder: HÖROLD, Sebastian, 86420 Diedorf (DE); BAUER, Harald, 50170 Kerpen (DE); SICKEN, Martin, 51149 Köln (DE)
(74) Vertreter: Jacobi, Carola
(86) Internationale Anmeldenummer: PCT/EP2014/000515
(87) Internationale Veröffentlichungsnummer: WO 2014/135256

(56) Entgegenhaltungen:
- EP-A2- 1 454 948
- WO-A1-03/035732
- WO-A1-2012/045414
- WO-A1-2013/083251

## Beschreibung

Die vorliegende Erfindung betrifft eine flammhemmende Polyamidzusammensetzung sowie Formkörper, die diese flammhemmende Polyamidzusammensetzung enthalten.

Aufgrund ihrer chemischen Zusammensetzung sind viele Kunststoffe leicht brennbar. Um die von Kunststoffverarbeitern und teilweise vom Gesetzgeber geforderten hohen Flammschutzanforderungen erreichen zu können, müssen Kunststoffe in der Regel mit Flammschutzmitteln ausgerüstet werden. Hierzu sind eine Vielzahl unterschiedlicher Flammschutzmittel und Flammschutzmittelsynergisten bekannt und auch kommerziell erhältlich. Aufgrund der vorteilhafteren Brandnebenerscheinungen bezüglich Rauchgasdichte und Rauchgaszusammensetzung sowie aus ökologischen Gründen werden nichthalogenierte Flammschutzmittelsysteme seit einiger Zeit bevorzugt eingesetzt.

Unter den nicht-halogenierten Flammschutzmitteln haben sich insbesondere für thermoplastische Polymere die Salze von Phosphinsäuren (Phosphinate) als besonders wirksam erwiesen (DE-A-2 252 258 und DE-A-2 447 727. Dabei werden einige Derivate dieser Flammschutzmittelklasse insbesondere aufgrund ihres geringen negativen Einflusses auf die mechanischen Eigenschaften der thermoplastischen Formmassen geschätzt.

Darüber hinaus wurden synergistische Kombinationen von Phosphinaten mit bestimmten stickstoffhaltigen Verbindungen, insbesondere mit Melaminderivaten, gefunden, die in einer ganzen Reihe von Polymeren als Flammschutzmittel effektiver wirken, als die Phosphinate allein (WO-A-2002/28953, WO-A-97/01664 sowie DE-A-197 34 437 und DE-A-197 37 727).

Ferner wurde gefunden, dass die Flammschutzwirkung der verschiedenen Phosphinate in thermoplastischen Polymeren auch durch Zusätze kleiner Mengen anorganischer bzw. mineralischer Verbindungen, die keinen Stickstoff enthalten, deutlich verbessert werden kann und dass die genannten Zusätze auch die Flammschutzwirkung von Phosphinaten in Kombination mit stickstoffhaltigen Synergisten verbessern können (EP-A-0 024 167, WO-A-2004/016684)).

Bei der Verwendung von phosphinathaltigen Flammschutzmittelsystemen kam es insbesondere bei Verarbeitungstemperaturen oberhalb 300°C anfänglich zu partiellem Polymerabbau, zu Verfärbungen des Polymers und zur Qualmentwicklung bei der Verarbeitung. Diese Schwierigkeiten ließen sich jedoch durch Zusatz von basischen oder amphoteren Oxiden, Hydroxiden, Carbonaten, Silikaten, Boraten oder Stannaten eindämmen (WO-A-2004/022640).

Die Verarbeitung von thermoplastischen Kunststoffen erfolgt überwiegend in der Schmelze. Die damit verbundenen Struktur- und Zustandsänderungen übersteht kaum ein Kunststoff, ohne sich in seiner chemischen Struktur zu verändern. Vernetzungen, Oxidation, Molekulargewichtsänderungen und damit auch Änderungen der physikalischen und technischen Eigenschaften können die Folge sein. Um die Belastung der Polymere während der Verarbeitung zu reduzieren, setzt man je nach Kunststoff unterschiedliche Additive ein.

Oft werden unterschiedlicher Additive gleichzeitig verwendet, von denen jedes eine bestimmte Aufgabe übernimmt. So werden Antioxidantien und Stabilisatoren eingesetzt, damit der Kunststoff ohne chemische Schädigung die Verarbeitung übersteht und anschließend lange Zeit gegen äußere Einflüsse wie Hitze, UV-Licht, Witterung und Sauerstoff (Luft) stabil ist. Neben der Verbesserung des Fließverhaltens verhindern Gleitmittel ein zu starkes Kleben der Kunststoffschmelze an heißen Maschinenteilen und wirken als Dispergiermittel für Pigmente, Füll- und Verstärkungsstoffe.

Durch die Verwendung von Flammschutzmitteln kann die Stabilität von Kunststoffen bei der Verarbeitung in der Schmelze beeinflusst werden. Flammschutzmittel müssen häufig in hohen Dosierungen zugesetzt werden, um eine ausreichende Flammwidrigkeit des Kunststoffs nach internationalen Normen sicherzustellen. Aufgrund ihrer chemischen Reaktivität, die für die Flammschutzwirkung bei hohen Temperaturen erforderlich ist, können Flammschutzmittel die Verarbeitungsstabilität von Kunststoffen beeinträchtigen. Es kann beispielsweise zu verstärktem Polymerabbau, zu Vernetzungsreaktionen, zu Ausgasungen oder Verfärbungen kommen.

Polyamide werden z. B. durch kleine Mengen von Kupferhalogeniden sowie aromatischen Aminen und sterisch gehinderten Phenole stabilisiert, wobei die Erzielung einer langfristigen Stabilität bei hohen Dauergebrauchstemperaturen im Vordergrund steht (H. Zweifel (Ed.): "Plastics Additives Handbook", 5th Edition, Carl Hanser Verlag, München, 2000, Seiten 80 bis 84).

Insbesondere bei der Verwendung phosphorhaltiger Flammschutzmittel in Polyamiden erwies sich die Wirkung der bisher beschriebenen Stabilisatoren als unzureichend, speziell um die bei der Verarbeitung auftretenden Effekte wie Verfärbung und Molekulargewichtsabbau, zu unterdrücken.

Es war daher Aufgabe der vorliegenden Erfindung, halogenfreie, flammgeschützte, thermoplastische Polyamidzusammensetzungen (Formmassen) auf Basis phosphinathaltiger Flammschutzsysteme zur Verfügung zu stellen, die eine hohe thermische Stabilität aufweisen und keine Migrationseffekte zeigen bei gleichzeitig guter Fließfähigkeit und hohen elektrischen Werten (CTI > 550V) und gutem Flammschutz (UL94 VO bis 0.4 mm).

Es wurde nun überraschend gefunden, dass die thermische Stabilität in phosphinathaltigen flammgeschützten thermoplastischen Polyamiden deutlich verbessert und die Migrationsneigung verringert werden kann, wenn die Formmasse zusätzlich zu den Phosphinaten (Komponente B) ein Salz der phosphorigen Säure (auch als Phosphonsäure bezeichnet) als Komponente C enthält. Bei dieser speziellen Kombination bleibt auch das ausgeglichene Eigenschaftsprofil der Polyamide hinsichtlich elektrischer und mechanischer Eigenschaften erhalten. Darüber hinaus enthält die Polyamid-Zusammensetzung (Formmasse) als Komponente D Füll- und/oder Verstärkungsstoffe. Zudem kann die erfindungsgemäße Polyamidzusammensetzung als Komponente E Carboxyl(ester)amide enthalten.

Weiterhin kann die erfindungsgemäße Polyamidzusammensetzung als Komponente F ein Phosphonit oder ein Phosphonit/Phosphit-Gemisch und als Komponente G einen Ester oder ein Salz von langkettigen aliphatischen Carbonsäuren (Fettsäuren), die typischerweise Kettenlängen von C₁₄ bis C₄₀ aufweisen, enthalten.

Gegenstand der Erfindung ist daher eine flammhemmende Polyamidzusammensetzung, enthaltend
als Komponente A 1 bis 96 Gew.-% eines Polyamid-Blends enthaltend mehrere thermoplastische Polyamide, als Komponente B 2 bis 25 Gew.-% eines Dialkylphosphinsäuresalzes der Formel (I) und/oder eines Diphosphinsäuresalzes der Formel (II) und/oder deren Polymere, 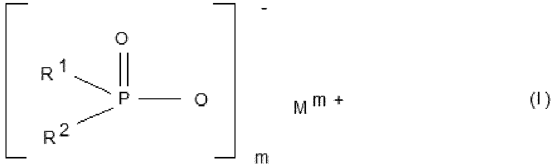 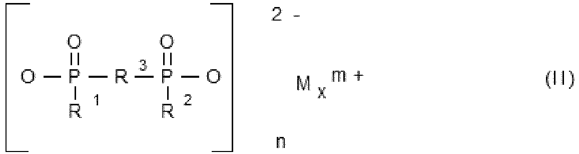 worin
- R¹, R²: gleich oder verschieden sind und C₁-C₆-Alkyl, linear oder verzweigt:
- R³: C₁-C₁₀-Alkylen, linear oder verzweigt, C₆-C₁₀-Arylen, C₇-C₂₀ -Alkylarylen oder C₇-C₂₀ -Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;

- m: 1 bis 4;
- n: 1 bis 4;
- x: 1 bis 4
bedeuten,
als Komponente C 1 bis 20 Gew.-% Salz der phosphorigen Säure
als Komponente D 1 bis 50 Gew.-% Füll- oder Verstärkungsstoff,
als Komponente E 0 bis 2 Gew.-% eines Carboxyl(ester)amids,
als Komponente F 0 bis 1 Gew.-% eines Phosphonits oder einer Mischung aus einem Phosphonit und einem Phosphit und
als Komponente G 0 bis 1 Gew.-% eines Esters oder Salzes von langkettigen aliphatischen Carbonsäuren (Fettsäuren), die Kettenlängen von C₁₄ bis C₄₀ aufweisen, wobei die Summe der Komponenten immer 100 Gew.-% beträgt. Bevorzugt enthält die flammhemmende Polyamidzusammensetzung
15 bis 91,9 Gew.-% Komponente A,
5 bis 20 Gew.-% Komponente B,
2 bis 10 Gew.-% Komponente C,
1 bis 50 Gew.-% Komponente D
0 bis 2 Gew.-% Komponente E,
0 bis 1 Gew.-% Komponente F und
0,1 bis 1 Gew.-% Komponente G.

Besonders bevorzugt enthält die flammhemmende Polyamidzusammensetzung
16 bis 91,8 Gew.-% Komponente A,
5 bis 20 Gew.-% Komponente B,
2 bis 10 Gew.-% Komponente C,
1 bis 50 Gew.-% Komponente D
0 bis 2 Gew.-% Komponente E,
0,1 bis 1 Gew.-% Komponente F und
0,1 bis 1 Gew.% Komponente G.

Insbesondere bevorzugt enthält die flammhemmende Polyamidzusammensetzung 16 bis 82,7 Gew.-% Komponente A,
5 bis 20 Gew.-% Komponente B,
2 bis 10 Gew.-% Komponente C,
10 bis 50 Gew.-% Komponente D
0,1 bis 2 Gew.-% Komponente E,
0,1 bis 1 Gew.-% Komponente F und
0,1 bis 1 Gew.% Komponente G.

Eine weitere bevorzugte flammhemmende Polyamidzusammensetzung enthält
26 bis 72,7 Gew.-% Komponente A,
5 bis 20 Gew.-% Komponente B,
2 bis 10 Gew.-% Komponente C,
20 bis 40 Gew.-% Komponente D
0,1 bis 2 Gew.-% Komponente E,
0,1 bis 1 Gew.-% Komponente F und
0,1 bis 1 Gew.% Komponente G.

Bevorzugt ist die flammhemmende Polyamidzusammensetzung dadurch gekennzeichnet, dass sie einen Comparative Tracking Index aufweist gemessen nach der International Electrotechnical Commission Standard IEC-60112/3 von größer als 550 Volt aufweist.

Die flammhemmende Polyamidzusammensetzung ist auch dadurch gekennzeichnet, dass sie eine Bewertung von V0 nach UL-94 von 3.2 mm bis 0.4 mm Dicke erreicht.

Bevorzugt weist die flammhemmende Polyamidzusammensetzung einen Glow Wire Flammability Index nach IEC-60695-2-12 von 960°C bei 0,75 - 3 mm Dicke auf.

Bevorzugt ist die Komponente A ein Polyamid-Blend, der aus Polyamiden (PA) ausgewählt ist aus der Gruppe bestehend aus PA 6, PA 6,6, PA 4,6, PA 12, PA 6,10, PA 6T/66, PA 6T/6, PA 4T, PA 9T, PA 10T oder Polyamid-Copolymeren. Bevorzugt handelt es sich bei Komponente A um Polymer Blends aus Polyamid 66 und Polyamid 6.

Bevorzugt besteht die Komponente A zu mindestens 75 Gew.-% aus Polyamid 66 und höchstens 25 Gew.-% aus Polyamid 6.

Bevorzugt handelt es sich auch um einen Blend aus Polyamid 66 und einem amorphen, teilaromatischen Polyamid.

Bevorzugt sind bei der Komponente B R¹, R² gleich oder verschieden und bedeuten Methyl, Ethyl, n-Propyl, iso-Propyl, n-Butyl, tert.-Butyl oder n-Pentyl.

Bevorzugt bedeutet bei der Komponente B R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen.

Bevorzugt entspricht das Salz der phosphorigen Säure (Komponente C) der allgemeinen Formel (III)

[HP(=O)O₂]²⁻ M ^{m+} (III)

entspricht, worin M Mg, Ca, Al, Sb, Sn, Ge, Ti, Zn, Fe, Zr, Ce, Bi, Sr, Mn, Li, Na und/oder K bedeutet.

Bevorzugt handelt es sich bei dem Salz der phosphorigen Säure (Komponente C) um Aluminiumphosphit [Al(H2PO₃)₃], sekundäres Aluminiumphosphit [Al₂(HPO₃)₃], basisches Aluminiumphosphit [Al(OH)(H₂PO₃)₂*2aq], Aluminiumphosphittetrahydrat [Al₂(HPO₃)₃*4aq], Aluminiumphosphonat, Al₇(HPO₃)₉(OH)₆(1,6-Hexandiamin)_{1,5}*12H₂O, Al₂(HPO₃)₃*xAl₂O₃*nH₂O mit x = 2,27 - 1 und/oder Al₄H₆P₁₆O₁₈.

Bei dem Salz der phosphorigen Säure (Komponente C) handelt es sich bevorzugt auch um Aluminiumphosphite der Formeln (1), (2) und/oder (3), wobei
Formel (1) Al₂(HPO₃)₃x (H₂O)_{q} umfasst und q 0 bis 4 bedeutet,
Formel (2) Al_{2,00}M_{z}(HPO₃)_{y}(OH)ᵥ x (H₂O)_{w} umfasst und
M Alkalimetallionen, z 0,01 bis 1,5 und y2,63 bis 3,5 und v 0 bis 2 und w 0 bis 4 bedeutet;
Formel (3) Al_{2,00}(HPO₃)ᵤ(H₂PO₃)ₜ x (H₂O)ₛ umfasst und u 2 bis 2,99 und t 2 bis 0,01 und s 0 bis 4 bedeutet
und/oder um Mischungen von Aluminiumphosphit der Formel (1) mit schwerlöslichen Aluminiumsalzen und stickstofffreien Fremdionen, um Mischungen von Aluminiumphosphit der Formel (3) mit Aluminiumsalzen, um Aluminiumphosphit [Al(H2PO₃)₃], um sekundäres Aluminiumphosphit [Al₂(HPO₃)₃], um basisches Aluminiumphosphit [Al(OH)(H₂PO₃)₂*2aq], um Aluminiumphosphittetrahydrat [Al₂(HPO₃)₃*4aq],um Aluminiumphosphonat, um Al₇(HPO₃)₉(OH)₆(1,6-Hexandiamin)_{1,5}*12H₂O, um Al₂(HPO₃)₃*xAl₂O₃*nH₂O mit x = 2,27 - 1 und/oder Al₄H₆P₁₆O₁₈.

Bevorzugt weist die Komponente C eine mittlere Teilchengröße von 0,2 bis 100 µm auf.

Bevorzugt handelt es sich bei dem verstärkenden Füllstoff um Glasfasern.

Bevorzugt handelt es sich bei der Komponente E um ein Derivat eines aromatischen Di- oder Tri-carboxyl(ester)amids.

Besonders bevorzugt handelt es sich bei Komponente E um N,N'-bis-piperdinyl-1,3-benzoldicarboxamid und/oder N,N'-bis(2,2,6,6-tetramethyl-4-piperdinyl)-1,3-benzoldicarboxamid.

Bevorzugt handelt es sich bei den Phosphoniten (Komponente F) um solche der allgemeinen Struktur

R-[P(OR₁)₂]ₘ (IV),

wobei
- R: ein ein- oder mehrwertiger aliphatischer, aromatischer oder heteroaromatischer organischer Rest ist und
- R₁: eine Verbindung der Struktur (V) 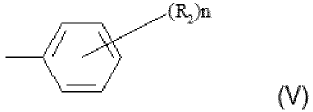
ist oder die beiden Reste R₁ eine verbrückende Gruppe der Struktur (VI) bilden 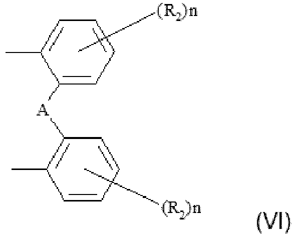 mit
- A: direkter Bindung, O, S, C₁-C₁₈-Alkylen (linear oder verzweigt) oder C₁-C₁₈-Alkyliden (linear oder verzweigt), in denen
- R₂: unabhängig voneinander C₁-C₁₂-Alkyl (linear oder verzweigt), C₁-C₁₂-Alkoxy und/oder C₅-C₁₂-Cycloalkyl bedeuten und n 0 bis 5 sowie m 1 bis 4 bedeutet.
Bevorzugt handelt es sich bei der Komponente G um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit.

Die Erfindung betrifft auch einen dreidimensionalen Artikel umfassend die flammhemmende Polyamidzusammensetzung nach einem oder mehreren der Ansprüche 1 bis 18, dadurch gekennzeichnet, dass es sich hierbei Formkörper, und insbesondere um Spritzgussteile, Extrusionsmassen und -teile handelt.

Überraschenderweise wurde gefunden, dass die erfindungsgemäßen flammhemmenden Polyamidzusammensetzungen eine gute Flammschutzwirkung aufweisen kombiniert mit einer verbesserten thermischen und hydrolytischen Stabilität. Durch den Zusatz eines Carboxyl(ester)amids wird die Verarbeitung verbessert. Der Polymerabbau wird verhindert bzw. sehr stark reduziert und es werden keine Formbeläge und keine Ausblühungen beobachtet. Die erfindungsgemäßen flammhemmenden Polyamidzusammensetzungen zeigen zudem nur geringe Verfärbung bei der Verarbeitung in der Schmelze.

Als Komponente A enthalten die Zusammensetzungen erfindungsgemäß einen Polyamid-Blend enthaltend mehrere thermoplastische Polyamide.

Unter thermoplastischen Polyamiden werden in Anlehnung an Hans Domininghaus in "Die Kunststoffe und ihre Eigenschaften", 5. Auflage (1998), Seite 14, Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind.

Die erfindungsgemäß bevorzugten Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren oder auch polymeren Legierungspartnern, bevorzugt Elastomeren, zu Werkstoffen mit speziell eingestellten Eigenschaftskombinationen ausgerüstet werden. Geeignet sind auch Blends mit Anteilen von anderen Polymeren, bevorzugt von Polyethylen, Polypropylen, ABS, wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit, insbesondere wenn es verstärkte Polyamide sind. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Bevorzugt als Komponente A in den Polyamidblends einzusetzende Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Edukte kommen aliphatische und/oder aromatische Dicarbonsäuren, bevorzugt Adipinsäure, 2,2,4- und 2,4,4-Trimethyladipinsäure, Azelainsäure, Sebazinsäure, Isophthalsäure, Terephthalsäure, aliphatische und/oder aromatische Diamine, bevorzugt Tetramethylendiamin, Hexamethylendiamin, 1,9-Nonandiamin, 2,2,4- und 2,4,4-Trimethylhexamethylendiamin, die isomeren Diaminodicyclohexylmethane, Diaminodicyclohexylpropane, Bisaminomethylcyclohexan, Phenylendiamine, Xylylendiamine, Aminocarbonsäuren, bevorzugt Aminocapronsäure oder die entsprechenden Lactame in Betracht. Copolyamide aus mehreren der genannten Monomeren sind eingeschlossen. Besonders bevorzugt werden Caprolactame, ganz besonders bevorzugt wird [epsilon]-Caprolactam eingesetzt.

Besonders geeignet sind weiterhin die meisten auf PA6, PA66 und anderen aliphatischen oder/und aromatischen Polyamiden bzw. Copolyamiden basierenden Compounds, bei denen auf eine Polyamidgruppe in der Polymerkette 3 bis 11 Methylengruppen kommen.

Bevorzugt handelt es sich bei den in den Polyamid-Blends der Komponente A eingesetzten Polyamiden und Copolyamiden um Polyamid 12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10, Polyamid 11, Polyamid 12, usw. Diese sind z. B unter den Handelsnamen Nylon^{®}, Fa. DuPont, Ultramid^{®}, Fa. BASF, Akulon^{®} K122, Fa. DSM, Zytel^{®} 7301, Fa. DuPont; Durethan^{®} B 29, Fa. Bayer und Grillamid^{®}, Fa. Ems Chemie bekannt.

Bevorzugt geeignet in den Polyamid-Blends der Komponente A sind auch aromatische Polyamide ausgehend von m-Xylol, Diamin und Adipinsäure; Polyamide, hergestellt aus Hexamethylendiamin und Iso-und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, lonomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt geeignet in den Polyamid-Blends der Komponente A sind aliphatische Polyamide, insbesondere PA6 und PA66 und PA 6T/66 und PA 6T/6. Ganz besonders bevorzugt sind Mischungen aus Polyamid 66 und Polyamid 6 mit bevorzugt Polyamid 66 > 50 % und Polyamid 6 < 50 % und besonders bevorzugt Polyamid 6 < 25 %, jeweils bezogen auf die Gesamtmenge Polyamid.

Bevorzugt sind auch Blends aus Polyamid 66 und einem oder mehrerer teilaromatischer, amorpher Polyamide.

Den erfindungsgemäß eingesetzten Polyamid-Blends der Komponente A können können übliche Additive, insbesondere Entformungsmittel, Stabilisatoren und/oder Fließhilfsmittel in der Schmelze zugemischt oder auf der Oberfläche aufgebracht werden. Ausgangsstoffe für die thermoplastischen Polyamide der Komponente A können synthetisch z.B. aus petrochemischen Rohstoffen und/oder über chemische oder biochemische Prozesse aus nachwachsenden Rohstoffen hervorgegangen sein

Es können auch andere hier nicht speziell erwähnte Flammschutzmittel oder Flammschutzmittelsynergisten zum Einsatz kommen. Insbesondere Stickstoffhaltige Flammschutzmittel wie Melamincyanurat, kondensiertes Melamin (Melem, Melon) oder Melaminphosphate und Melaminpolyphosphate können zugesetzt werden. Es können auch weitere Phosphorflammschutzmittel wie Arylphosphate, roter Phosphor oder Phosphazene verwendet werden. Ferner können Salze aliphatischer und aromatischer Sulfonsäuren und mineralische Flammschutzadditive wie Aluminium- und/oder Magnesiumhydroxid, Ca-Mg-Carbonat-Hydrate (z.B. DE-A 4 236 122) eingesetzt werden. In Frage kommen auch Flammschutzmittelsynergisten aus der Gruppe der Sauerstoff- Stickstoff- oder schwefelhaltigen Metallverbindung, bevorzugt Zinkoxid, Zinkborat, Zinkstannat, Zinkhydroxystannat, Zinksulfid, Molybdänoxid, Titandioxid, Magnesiumoxid, Magnesiumcarbonat, Calciumcarbonat, Calciumoxid, Titannitrid, Bornitrid, Magnesiumnitrid, Zinknitrid, Zinkphosphat, Calciumphosphat, Calciumborat, Magnesiumborat oder deren Mischungen.

Weitere bevorzugt geeignete Flammschutzadditive sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die Flammschutzmittel können in Reinform, sowie über Masterbatche oder Kompaktate zugesetzt werden.

Bevorzugt handelt es sich bei Komponente B um das Aluminium- oder das Zinksalz der Diethylphosphinsäure.

Bevorzugt bedeutet beim Aluminiumphosphit der Formel (1) q 0,01 bis 0,1.

Bevorzugt bedeutet beim Aluminiumphosphit der Formel (2) z 0,15 bis 0,4; y 2,80 bis 3; v 0,1 bis 0,4 und w 0,01 bis 0,1.

Bevorzugt bedeutet beim Aluminiumphosphit der Formel (3) u 2,834 bis 2,99; t 0,332 bis 0,03 und s 0,01 bis 0,1.

Als Komponente D können die erfindungsgemäßen flammhemmenden Polyamidzusammensetzungen in einer weiteren bevorzugten Ausführungsform mindestens einen Füllstoff oder Verstärkungsstoff enthalten.

Dabei können auch Mischungen aus zwei oder mehreren unterschiedlichen Füllstoffen und/oder Verstärkungsstoffen, bevorzugt auf Basis von Talk, Glimmer, Silikat, Quarz, Titandioxid, Wollastonit, Kaolin, amorphe Kieselsäuren, nanoskalige Mineralien, besonders bevorzugt Montmorillonite oder Nano-Böhmit, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern eingesetzt werden. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden mineralische teilchenförmige Füllstoffe auf der Basis von Talk, Wollastonit, Kaolin und/oder Glasfasern eingesetzt, wobei Glasfasern ganz besonders bevorzugt sind.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Bevorzugt seien nadelförmige Wollastonite genannt. Bevorzugt weist das Mineral eine Länge zu Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS Granulometer.

Der Füllstoff und/oder Verstärkungsstoff kann in einer bevorzugten Ausführungsform oberflächenmodifiziert sein, vorzugsweise mit einem Haftvermittler bzw. Haftvermittlersystem, besonders bevorzugt auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß ganz besonders bevorzugt als Komponente D einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Diese Fasern können mit einem geeigneten Schlichtesystem und einem Haftvermittler bzw. Haftvermittlersystem, bevorzugt auf Silanbasis, ausgerüstet sein.

Die erfindungsgemäßen Zusammensetzungen können noch weitere Additive enthalten. Bevorzugte Additive im Sinne der vorliegenden Erfindung sind Antioxdantien, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren Farbstoffe und Pigmente. Die Additive können alleine oder in Mischung bzw. in Form von Masterbatchen eingesetzt werden.

Geeignete Antioxidantien sind beispielsweise alkylierte Monophenole, z. B. 2,6-Di-tert-butyl-4-methylphenol; Alkylthiomethylphenole, z. B. 2,4-Di-octylthiomethyl-6-tert-butylphenol; Hydrochinone und alkylierte Hydrochinone, z. B. 2,6-Di-tert-butyl-4-methoxyphenol; Tocopherole, z. B. α-Tocopherol, β-Tocopherol, γ-Tocopherol, δ-Tocopherol und Mischungen davon (Vitamin E); Hydroxylierte Thiodiphenylether, z. B. 2,2'-Thio-bis(6-tert-butyl-4-methylphenol), 2,2'-Thio-bis(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-di-methyl-4-hydroxyphenyl)-disulfid; Alkyliden-Bisphenole, z. B. 2,2'-Methylen-bis-(6-tert-butyl-4-methylphenol; O-, N- und S-Benzylverbindungen, z. B. 3,5,3',5'-Tetra-tert-butyl-4,4'-dihydroxydi-benzylether; Hydroxybenzylierte Malonate, z. B. Dioctadecyl-2,2-bis-(3,5-di-tert-butyl-2-hydrorybenzyl)-malonat; Hydroxybenzyl-Aromaten, z. B. 1,3,5-Tris-(3,5-di-tert-buty)-4-hydroxybenzyl)-2,4,6-trimethylbenzo1, 1,4-Bis-(3,5-di-tert-butyl-4-hydroxybenzyl)-2,3,5,6-tetramethylbenzot 2,4,6-Tris-(3,5-di-tert-buryl-4-hydroxybenzyl)-phenol; Triazinverbindungen, z. B. 2,4-Bis-octylmercapto-6(3,5-di-tert-butyl-4-hydroxyanilino)-1,3,5-triazin; Benzylphosphonate, z. B. Dimethyl-2,5-di-tert-butyl-4-hydroxybenzylphosphonat; Acylaminophenole, 4-Hydroxylaurin-säureamid, 4-Hydroxystearinsäureanilid, N-(3,5-di-tert-butyl-4-hydroxyphenyl)-carbaminsäureoctylester; Ester der β-(3.5-Di-tert-butyl-4-hydroxyphenyl)-propionsäure mit ein- oder mehr-wertigen Alkoholen; Ester der β-(5-tert-Butyl-4-hydroxy-3-methylphenyl)-propionsäure mit ein- oder mehrwertigen Alkoholen; Ester der β-(3,5-Dicyclohexyl-4-hydroxyphenyl)-propionsäure mit ein- oder mehr-wertigen Alkoholen; Ester der 3,5-Di-tert-butyl-4-hydroxyphenylessigsäure mit ein- oder mehrwertigen Alkoholen; Amide der β-(3,5-Di-tert-butyl-4-hydroxyphenyl)-propionsäure, wie z. B. N,N'-Bis-(3,5-di-tert-butyl4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Besonders bevorzugt werden sterisch gehinderte Phenole alleine oder in Kombination mit Phosphiten eingesetzt, wobei die Verwendung von N,N'-Bis[3-(3',5'-di-tert-butyl-4'-hydroxyphenyl)propionyl]hexamethylenediamin (z.B. Irganox^{®} 1098 der Fa. BASF SE, Ludwigshafen. Deutschland) ganz besonders bevorzugt ist.

Geeignete UV-Absorber und Lichtschutzmittel sind beispielsweise 2-(2'-Hydroxyphenyl)-benzotriazole, wie z. B. 2-(2'-Hydroxy-5'-methylphenyl)-benzotriazol; 2-Hydroxybenzophenone, wie z. B. das 4-Hydroxy, 4-Methoxy, 4-Octoxy, 4-Decyloxy-, 4-Dodecyloxy-, 4-Benzyloxy-, 4,2',4-Trihydroxy-, 2'-Hydroxy-4,4'-dimethoxy-Derivat;
Ester von gegebenenfalls substituierten Benzoesäuren, wie z. B. 4-tert-Butylphenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoe-säure-2-methyl-4,6-di-tert-butylphenylester; Acrylate, wie z. B. α-Cyan-β,β-diphenylacrylsäure-ethylester bzw. -isooctylester, α-Carbomethoxy-zimtsäuremethylester, α-Cyano-β-methyl-p-methoxy-zimtsäuremethyl-ester bzw. -butylester, α-Carbomethoxy-p-methoxyzimtsäuremethylester, N-(β-Carbo-methoxy-β-cyanovinyl)-2-methyl-indolin.

Als Farbmittel werden bevorzugt anorganische Pigmente, insbesondere Titandioxid, Ultramarinblau, Eisenoxid, Zinksulfid oder Ruß, weiterhin organische Pigmente, bevorzugt Phthalocyanine, Chinacridone, Perylene sowie Farbstoffe, bevorzugt Nigrosin und Anthrachinone eingesetzt werden.

Geeignete Polyamidstabilisatoren sind z. B. Kupfersalze in Kombination mit Jodiden und/oder Phosphorverbindungen und Salze des zweiwertigen Mangans.

Geeignete basische Co-Stabilisatoren sind Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

Geeignete Nukleierungsmittel sind z. B. 4-tert-Butylbenzoesäure, Adipinsäure und Diphenylessigsäure, Aluminiumoxid oder Siliziumdioxid sowie ganz besonders bevorzugt Talkum, wobei diese Aufzählung nicht abschließend ist.

Als Fließhilfsmittel werden bevorzugt Copolymerisate aus mindestens einem α-Olefin mit mindestens einem Methacrylsäurester oder Acrylsäureester eines aliphatischen Alkohols eingesetzt. Besonders bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20 C-Atomen enthält. Ganz besonders bevorzugt ist Acrylsäure-(2-ethyl)-hexylester. Als Fließhilfsmittel erfindungsgemäß geeignete Copolymerisate zeichnen sich neben der Zusammensetzung auch durch das niedrige Molekulargewicht aus. Dementsprechend sind für die erfindungsgemäß vor thermischem Abbau zu bewahrenden Zusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI (Melt-Flow-Index) dient zur Charakterisierung des Flusses einer Schmelze eines Thermoplasten und unterliegt den Normen ISO 1133 oder ASTM D 1238. Der MFI bzw. alle Angaben zum MFI im Rahmen der vorliegenden Erfindung beziehen sich bzw. wurden einheitlich nach ISO 1133 bei 190 °C und einem Prüfgewicht von 2,16 kg gemessen bzw. bestimmt.

Bevorzugt einzusetzende Weichmacher sind Phthalsäuredioctylester, Phthalsäuredibenzylester, Phthalsäurebutylbenzylester, Kohlenwasserstofföle oder N-(n-Butyl)benzolsulfonamid.

Die vorliegende Erfindung betrifft aber auch Erzeugnisse, bevorzugt Fasern, Folien oder Formkörper, erhältlich aus den erfindungsgemäß beschriebenen Zusammensetzungen durch Spritzguss oder Extrusion.

Geeignete Phosphinate (Komponente B) sind in der PCT/WO97/39053 beschrieben, auf die ausdrücklich Bezug genommen wird. Besonders bevorzugte Phosphinate sind Aluminium-, Calcium- und Zinkphosphinate.

Bevorzugte Salze der phosphorigen Säure (Komponente C) sind in Wasser unlösliche bzw. schwerlösliche Salze.

Besonders bevorzugte Salze der phosphorigen Säure sind das Aluminium-, das Calcium- und das Zinksalze

Besonders bevorzugt handelt es sich bei Komponente C um ein Umsetzungsprodukt aus Phosphoriger Säure und einer Aluminiumverbindung.

Bevorzugt sind Aluminiumphosphite mit den CAS-Nummern 15099-32-8, 119103-85-4, 220689-59-8, 56287-23-1, 156024-71-4, 71449-76-8 und 15099-32-8.

Bevorzugt haben die Aluminiumphosphite Teilchengrößen von 0,2-100 µm

Die Herstellung der bevorzugten Aluminiumphosphite erfolgt durch Umsetzung einer Aluminiumquelle mit einer Phosphorquelle und wahlweise einem Templat in einem Lösungsmittel bei 20 - 200 °C während einer Zeitspanne bis zu 4 Tagen. Aluminiumquelle und Phosphorquelle werden dazu 1 - 4 h vermischt, unter hydrothermalen Bedingungen oder am Rückfluss erhitzt, abfiltriert, gewaschen und z. B. bei 110 °C getrocknet.

Bevorzugte Aluminiumquellen sind Aluminiumisopropoxid, Aluminiumnitrat, Aluminiumchlorid, Aluminiumhydroxid (z. B. Pseudoböhmit).

Bevorzugte Phosphorquellen sind Phosphorige Säure, (saures) Ammoniumphosphit, Alkaliphosphite oder Erdalkaliphosphite.

Bevorzugte Alkaliphosphite sind Dinatriumphosphit, Dinatriumphosphithydrat, Trinatriumphosphit, Kaliumhydrogenphosphit

Bevorzugtes Dinatriumphosphithydrat ist ^{®}Brüggolen H10 der Fa. Brüggemann.

Bevorzugte Template sind 1,6-Hexandiamin, Guanidincarbonat oder Ammoniak.

Bevorzugtes Erdalkaliphosphit ist Calciumphosphit.

Das bevorzugte Verhältnis von Aluminium zu Phosphor zu Lösungsmittel ist dabei 1 : 1 : 3,7 bis 1 : 2,2 : 100 mol. Das Verhältnis von Aluminium zu Templat ist 1 : 0 bis 1 : 17 mol. Der bevorzugte pH-Wert der Reaktionslösung ist 3 bis 9. Bevorzugtes Lösungsmittel ist Wasser.

Besonders bevorzugt wird in der Anwendung das gleiche Salz der Phosphinsäure wie der phosphorigen Säure verwendet, also z. B. Aluminiumdialkylphosphinat zusammen mit Aluminiumphosphit oder Zinkdialkylphosphinat zusammen mit Zinkphosphit.

Bevorzugt handelt es sich bei der Komponente G um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit. Besonders bevorzugt handelt es sich um Aluminium-, Calcium- oder Zinkstearat oder Calciummontanat.

Als weitere Flammschutzmittel sind bevorzugt Arylphosphate, Phosphonate, Salze der Hypophosphorigen Säure sowie roter Phosphor geeignet.

Bevorzugt sind bei den Phosphoniten die Reste
- R: C₄-C₁₈-Alkyl (linear oder verzweigt), C₄-C₁₈-Alkylen (linear oder verzweigt), C₅-C₁₂-Cycloalkyl, C₅-C₁₂-Cycloalkylen, C₆-C₂₄-Aryl bzw. -Heteroaryl, C₆-C₂₄- Arylen bzw. -Heteroarylen welche auch weiter substituiert sein können;
- R₁: eine Verbindung der Struktur (V) oder (VI) mit
- R₂: unabhängig voneinander C₁-C₈-Alkyl (linear oder verzweigt), C₁-C₈-Alkoxy, Cyclohexyl;
- A: direkte Bindung, O, C₁-C₈-Alkylen (linear oder verzweigt), C₁-C₈-Alkyliden (linear oder verzweigt) und
- n: 0 bis 3
- m: 1 bis 3.

Besonders bevorzugt bei den Phosphoniten sind die Reste
- R: Cyclohexyl, Phenyl, Phenylen, Biphenyl und Biphenylen,
- R₁: eine Verbindung der Struktur (V) oder (VI) mit
- R₂: unabhängig voneinander C₁-C₈-Alkyl (linear oder verzweigt), C₁-C₈-Alkoxy, Cyclohexyl
- A: direkte Bindung, O, C₁-C₆-Alkyliden (linear oder verzweigt) und
- n: 1 bis 3
- m: 1 oder 2 .

Weiterhin werden Gemische von Verbindungen gem. obiger Ansprüche in Kombination mit Phosphiten der Formel (VII)

P(OR₁)₃ (VII)

beansprucht, wobei R₁ die oben angegebenen Bedeutungen hat.

Insbesonders bevorzugt sind Verbindungen, die, basierend auf obigen Ansprüchen, durch eine Friedel-Crafts-Reaktion eines Aromaten oder Heteroaromaten, wie Benzol, Biphenyl oder Diphenylether mit Phosphortrihalogeniden, bevorzugt Phosphortrichlorid, in Gegenwart eines Friedel-Crafts-Katalysators wie Aluminiumchlorid, Zinkchlorid, Eisenchlorid etc. sowie nachfolgender Reaktion mit den der Strukturen (II) und (III) zugrundeliegenden Phenolen, hergestellt werden. Dabei werden ausdrücklich auch solche Gemische mit Phosphiten eingeschlossen, die nach der genannten Reaktionssequenz aus überschüssigem Phosphortrihalogenid und den vorstehend beschriebenen Phenolen entstehen.

Aus dieser Gruppe von Verbindungen sind wiederum die nachstehenden Strukturen (VIII) und (IX) bevorzugt: 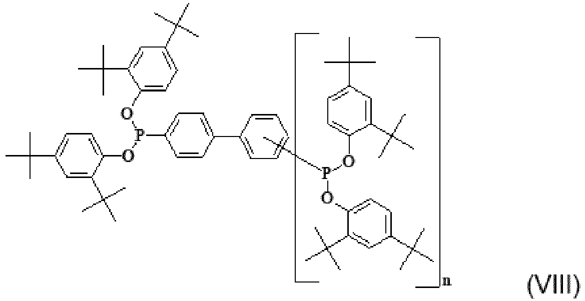 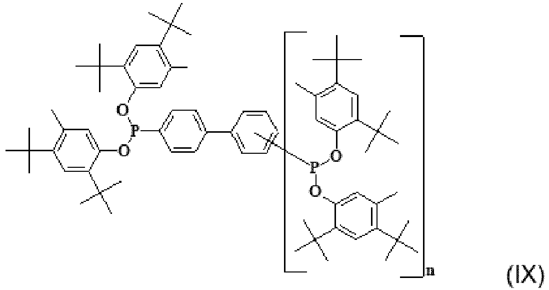 wobei n 0 oder 1 betragen kann und diese Gemische optional weiterhin noch Anteile der Verbindung (X) bzw. (XI) enthalten können:

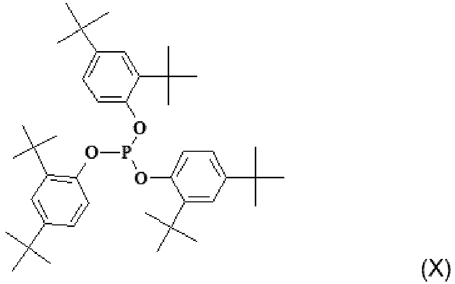

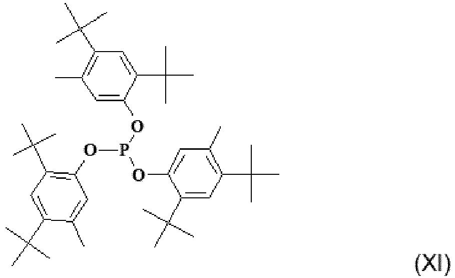

Geeignet als Komponente G sind Ester oder Salze von langkettigen aliphatischen Carbonsäuren (Fettsäuren), die typischerweise Kettenlängen von C₁₄ bis C₄₀ aufweisen. Bei den Estern handelt es sich um Umsetzungsprodukte der genannten Carbonsäuren mit gebräuchlichen mehrwertigen Alkoholen, wie z. B. Ethylenglykol, Glycerin, Trimethylolpropan oder Pentaerythrit. Als Salze der genannten Carbonsäuren kommen vor allem Alkali- oder Erdalkalisalze bzw. Aluminium- und Zinksalze in Betracht.

Bevorzugt handelt es sich bei der Komponente G um Ester oder Salze der Stearinsäure wie z. B. Glycerinmonostearat oder Calciumstearat.

Bevorzugt handelt es sich bei der Komponente G um Umsetzungsprodukte von Montanwachssäuren mit Ethylenglykol.

Bevorzugt handelt es sich bei den Umsetzungsprodukten um eine Mischung aus Ethylenglykol-Mono-Montanwachssäureester, Ethylenglykol-Di-Montanwachssäureester, Montanwachssäuren und Ethylenglykol.

Bevorzugt handelt es sich bei der Komponente G um Umsetzungsprodukte von Montanwachssäuren mit einem Calciumsalz.

Besonders bevorzugt handelt es sich bei den Umsetzungsprodukten um eine Mischung aus 1,3-Budandiol-Mono-Montanwachssäureester, 1,3-Budandiol-Di-Montanwachssäureester, Montanwachssäuren, 1,3-Butandiol, Calciummontanat und dem Calciumsalz.

Die vorgenannten Additive können in den verschiedensten Verfahrensschritten in den Kunststoff eingebracht werden. So ist es bei Polyamiden möglich, bereits zu Beginn oder am Ende der Polymerisation/Polykondensation oder in einem folgenden Compoundierprozess die Additive in die Polymerschmelze einzumischen. Weiterhin gibt es Verarbeitungsprozesse bei denen die Additive erst später zugefügt werden. Dies wird insbesondere beim Einsatz von Pigment- oder Additivmasterbatches praktiziert. Außerdem besteht die Möglichkeit, insbesondere pulverförmige Additive auf das durch den Trocknungsprozess eventuell warme Polymergranulat aufzutrommeln.

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z. B. Spritzgießmaschine Typ Aarburg Allrounder) und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

Zusätzlich können Carbodiimide enthalten sein.

### Beispiele

### 1. Eingesetzte Komponenten

Handelsübliche Polyamide (Komponente A):
   Polyamid 6.6 (PA 6.6-GV): Ultramid^{®} A27 (Fa. BASF AG, D)
   Polyamid 6T/66: Zytel^{®} HTN FE 8200 (Fa. DuPont, USA)
   Polyamid 6: Durethan^{®} B29 (Lanxess AG, D)
   Polyamid 6T/6I (amorph): Grivory^{®} G21, EMS Grivory, CH
   Polyamid 610: Ultramid^{®} S, Fa. BASF AG, D
Flammschutzmittel (Komponente B):
   Aluminiumsalz der Diethylphosphinsäure, im Folgenden als DEPAL bezeichnet
Flammschutzmittel (Komponente C):
   Aluminiumsalz der Phosphorigen Säure, im Folgenden als PHOPAL bezeichnet
   Vergleich: MPP, Melaminpolyphosphat, Melapur^{®} 200/70, Fa. BASF AG, D
Komponente D:
   Glasfasern PPG HP 3610 10µm Durchmesser, 4,5 mm Länge (Fa. PPG, NL),
Aromatische di- oder tri-carboxylester bzw. -amide (Komponente E):
   Nylostab^{®} S-EED (Fa. Clariant Produkte (Deutschland) GmbH, D)
   (* Nylostab S-EED entspricht N,N'-bis(2,2,6,6-tetramethyl-4-piperidyl)-1,3-benzoldicarboxamid)
Phosphonite (Komponente F):
   Sandostab^{®} P-EPQ, Fa. Clariant Produkte (Deutschland) GmbH, D
Wachskomponenten (Komponente G):
   Licomont^{®} CaV 102 (Ca-Salz der Montanwachssäure), Fa. Clariant Produkte (Deutschland) GmbH, D
   Licowax^{®} E (Ester der Montanwachssäure), Fa. Clariant Produkte (Deutschland) GmbH, D

### 2. Herstellung, Verarbeitung und Prüfung von flammhemmenden PolyamidFormmassen

Die Flammschutzmittelkomponenten wurden in dem in der Tabelle angegebenen Verhältnis mit dem Phosphonit, den Gleitmitteln und Stabilisatoren vermischt und über den Seiteneinzug eines Doppelschnecken-Extruders (Typ Leistritz ZSE 27/44D) bei Temperaturen von 260 - 310 °C in PA 6.6 bzw. bei 250 - 275 °C in PA 6 eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 250 bis 300 °C zu Prüfkörpern verarbeitet und anhand des UL 94-Tests (Underwriter Laboratories) auf Flammwidrigkeit geprüft und klassifiziert.

Die Fließfähigkeit der Formmassen wurde durch Ermittlung des Schmelzvolumenindex (MVR) bei 275 °C/2,16 kg bestimmt. Höhere MVR Werte bedeuten bessere Fließfähigkeit im Spritzgussprozess. Ein starker Anstieg des MVR-Wertes kann allerdings auch auf einen Polymerabbau hindeuten.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Die Ergebnisse, in denen die Flammschutzmittel-Stabilisator-Mischungen gemäß der Erfindung eingesetzt wurden, sind in den Beispielen B2-B3 aufgelistet. Alle Mengen sind als Gew.-% angegeben und beziehen sich auf die Kunststoff-Formmasse einschließlich der Flammschutzmittel, Additive und Verstärkungsstoffe.

**Tabelle 1: PA 66 GF 30 Versuchsergebnisse. V1-V3 und V3a sindVergleichsbeispiele, B2 ist eine erfindungsgemäße Polyamid Formmasse , B3 ist eine nicht erfindungsgemäße Polyamid Formmasse**

| | V1 | V2 | V3 | V3a | B2 | B3 |
|---|---|---|---|---|---|---|
| A: Polyamid 66 | 49,55 | 49,55 | 49,55 | 49,55 | 39,55 | 49,30 |
| A: Polyamid 6 | | | | | 10 | |
| D: Glasfasern HP3610 | 30 | 30 | 30 | 30 | 30 | 30 |
| B: DEPAL | 20 | 12 | 15 | 15 | 17 | 17 |
| C: PHOPAL | | | | 5 | 3 | 7 |
| MPP | | 8 | 5 | | | |
| E: SEED | | | | | | 0,25 |
| G: CaV 102 | 0,25 | 0,25 | 0,25 | 0,25 | 0,25 | 0,25 |
| F: P-EPQ | 0,20 | 0,20 | 0,20 | 0,20 | 0,20 | 0,20 |
| UL 94 0,4 mm | V-1 | V-0 | V-1 | V-0 | V-0 | V-0 |
| GWFI [°C] | 850 | 960 | 960 | 960 | 960 | 960 |
| MVR 275 °C/2,16 kg | 4 | 21 | 12 | 5 | 13 | 12 |
| Ausblühungen* | keine | deutlich | gering | keine | keine | keine |
| Farbe | weiß | grau | grau | weiß | weiß | weiß |
| Oberfläche | rau | rau | rau | rau | glatt | glatt |
| CTI [Volt] | 600 | 550 | 550 | 600 | 600 | 600 |
| Schlagzähigkeit [kJ/m²] | 60 | 63 | 62 | 61 | 60 | 63 |
| Kerbschlagzähigkeit [kJ/m²] | 12 | 11 | 12 | 12 | 12 | 14 |

| | | | | | | |
|---|---|---|---|---|---|---|
| * 14 Tage 100 % Feuchte 70 °C | | | | | | |

Nur durch die erfindungsgemäße Kombination aus Polyamid-Blend, Glasfasern, DEPAL und PHOPAL werden Polyamid Formmassen erhalten, die die Brandklasse UL 94 V-0 bei 0,4 mm erreichen und gleichzeitig CTI 600 Volt, Schlagzähigkeit größer 60 kJ/m², Kerbschlagzähigkeit größer 10 kJ/m² aufweisen, keine Verfärbungen und keine Ausblühungen sowie eine glatte Oberfläche zeigen. Durch den Zusatz von Polyamid 6 (Beispiel B2) und durch den Zusatz von Nylostab SEED (nicht erfindungsgemäßes Beispiel B3) wird zudem eine bessere Fließfähigkeit (höherer MVR) und eine schönere Oberfläche erzeugt. Durch die Verwendung von DEPAL ohne PHOPAL (V1) wird kein V-0 erreicht, durch die Kombination von DEPAL mit MPP wird zwar V-0 erreicht, die Polyamid-Formmasse zeigt aber Verfärbungen und Ausblühungen. Ein CTI von 600V wird ebenfalls nicht erreicht.

**Tabelle 2: PA 6 GF 30 Versuchsergebnisse. V4-V6 sind Vergleichsbeispiele, V4a-V6a sind nicht erfindungsgemäße Polyamid Formmassen**

| | V4 | V5 | V6 | V4a | V5a | V6a |
|---|---|---|---|---|---|---|
| A: Polyamid 6 | 49,55 | 49,55 | 49,55 | 49,55 | 49,55 | 49,30 |
| D: Glasfasern HP3610 | 30 | 30 | 30 | 30 | 30 | 30 |
| B: DEPAL | 20 | 12 | 15 | 15 | 17 | 17 |
| C: PHOPAL | | | | 5 | 3 | 7 |
| MPP | | 8 | 5 | | | |
| E: SEED | | | | | | 0,25 |
| G: Wachs E | 0,25 | 0,25 | 0,25 | 0,25 | 0,25 | 0,25 |
| F: P-EPQ | 0,20 | 0,20 | 0,20 | 0,20 | 0,20 | 0,20 |
| UL 94 0,4 mm | V-1 | V-0 | V-1 | V-1 | V-0 | V-0 |
| MVR 250°C/2,16 kg | 5 | 12 | 9 | 5 | 5 | 11 |
| Ausblühungen* | keine | deutlich | gering | keine | keine | keine |
| Farbe | weiß | grau | grau | weiß | weiß | weiß |
| Oberfläche | rau | rau | rau | rau | rau | glatt |
| CTI [Volt] | 600 | 550 | 500 | 600 | 600 | 600 |
| Schlagzähigkeit [kJ/m²] | 61 | 59 | 60 | 63 | 63 | 65 |
| Kerbschlagzähigkeit [kJ/m²] | 11 | 9,8 | 10 | 11 | 11 | 14 |

| | | | | | | |
|---|---|---|---|---|---|---|
| * 14 Tage 100 % Feuchte 70 °C | | | | | | |

Die Versuche in Polyamid 6 zeigen ein ähnliches Bild: nur durch die nicht erfindungsgemäße Kombination von Polyamid 6 mit Glasfasern, DEPAL, PHOPAL und SEED werden Formmassen erhalten, die gleichzeitig UL 94 V-0 bei 0,4 mm, CTI 600V, keine Farbveränderungen und keine Ausblühungen, gute Fließfähigkeit und gute mechanische Werte aufweisen.

**Tabelle 3: Polyamid 66 / 6T/6I Blends und Polyamid 610**

| | V7 | V8 | B7 | V7a | B9 | V8a |
|---|---|---|---|---|---|---|
| A1: Polyamid 66 | 35,55 | | 35,55 | | 34,30 | |
| A2: Polyamid 6T/6I | 15 | | 15 | | 15 | |
| A3: Polyamid 610 | | 49,55 | | 49,55 | | 49,30 |
| D: Glasfasern HP3610 | 30 | 30 | 30 | 30 | 30 | 30 |
| B: DEPAL | 15 | 12 | 15 | 15 | 15 | 15 |
| C: PHOPAL | | | 5 | 5 | 5 | 5 |
| MPP | 5 | 8 | | | | |
| E: SEED | | | | | 0,25 | 0,25 |
| G: CaV 102 | 0,25 | 0,25 | 0,25 | 0,25 | 0,25 | 0,25 |
| F: P-EPQ | 0,20 | 0,20 | 0,20 | 0,20 | 0,20 | 0,20 |
| UL 94 0,4 mm | V-1 | V-0 | V-0 | V-0 | V-0 | V-0 |
| MVR 275 °C/2,16 kg | 25 | 23 | 7 | 6 | 12 | 15 |
| Ausblühungen* | deutlich | deutlich | keine | keine | keine | keine |
| Farbe | weiß | grau | weiß | weiß | weiß | weiß |
| Oberfläche | rau | rau | rau | rau | glatt | glatt |
| CTI [Volt] | 600 | 550 | 550 | 600 | 600 | 600 |
| Schlagzähigkeit [kJ/m²] | 60 | 65 | 62 | 61 | 60 | 63 |
| Kerbschlagzähigkeit [kJ/m²] | 12 | 13 | 12 | 12 | 12 | 14 |

| | | | | | | |
|---|---|---|---|---|---|---|
| * 14 Tage 100 % Feuchte 70 °C | | | | | | |

Die Versuche in Polyamid 610 zeigen ein ähnliches Bild wie bei PA6 beobachtet: nur durch die nicht erfindungsgemäße Kombination von Polyamid 6 mit Glasfasern, DEPAL, PHOPAL und SEED (Beispiel V8a) werden Formmassen erhalten, die gleichzeitig UL 94 V-0 bei 0,4 mm, CTI 600V, keine Farbveränderungen und keine Ausblühungen, gute Fließfähigkeit und gute mechanische Werte aufweisen.

In dem Blend aus Polyamid 66 und einem amorphen, teilaromatischen Polyamid (6T/6I) wird mit DEPAL + MPP beginnende Zersetzung, erkennbar an sehr hohem MVR, beobachtet. Die erfindungsgemäße Kombination aus DEPAL und PHOPAL zeigt dagegen keine Zersetzung, UL 94 V-0 und CTI 600 V. Durch den Zusatz von SEED kann die Fließfähigkeit und die Oberflächengüte verbessert werden.

**Tabelle 4: PA6T/66 GF 30 Versuchsergebnisse.**

| | V9 | V10 | V9a | V10a |
|---|---|---|---|---|
| A: Polyamid 6T/66 | 57,55 | 54,55 | 57,55 | 54,30 |
| D: Glasfasern HP3610 | 30 | 30 | 30 | 30 |
| B: DEPAL | 12 | 12 | 12 | 12 |
| MPP | | 3 | | |
| C: PHOPAL | | | 3 | 3 |
| D: SEED | | | | 0,25 |
| G: CaV 102 | 0,25 | 0,25 | 0,25 | 0,25 |
| E: P-EPQ | 0,20 | 0,20 | 0,20 | 0,20 |
| UL 94 0,8 mm | V-1 | n.b.* | V-0 | V-0 |
| CTI [V] | 600 | n.b.* | 600 | 600 |
| MVR 325°C/2,16 kg | 13 | n.b. | 8 | 17 |
| Schlagzähigkeit [kJ/m²] | 40 | n.b. | 45 | 47 |
| Kerbschlagzähigkeit [kJ/m²] | 8 | n.b. | 12 | 13 |

| | | | | |
|---|---|---|---|---|
| * Zersetzung bei der Extrusion, keinen Polymerstrang erhalten | | | | |

In Polyamid 6T/66 kann das System DEPAL + MPP nicht eingesetzt werden, es wird bereits bei der Compoundierung starke Zersetzung beobachtet. Der Polymerstrang schäumt auf, eine Granulierung ist nicht möglich. Das nicht erfindungsgemäße Polyamid mit DEPAL, PHOPAL und Glasfasern ist dagegen gut zu verarbeiten und erreicht UL 94 V-0 und CTI 600 V. Auch hier kann durch den Zusatz von SEED die Fließfähigkeit und die Oberflächengüte verbessert werden.

## Patentansprüche

1. Flammhemmende Polyamidzusammensetzung, enthaltend als Komponente A 1 bis 96 Gew.-% eines Polyamid-Blends enthaltend mehrere thermoplastische Polyamide, als Komponente B 2 bis 25 Gew.-% eines Dialkylphosphinsäuresalzes der Formel (I) und/oder eines Diphosphinsäuresalzes der Formel (II) und/oder deren Polymere, 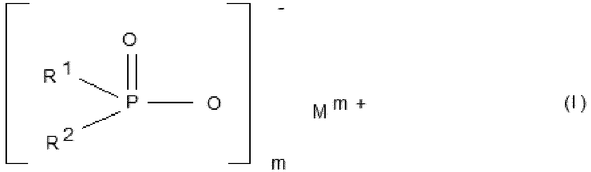 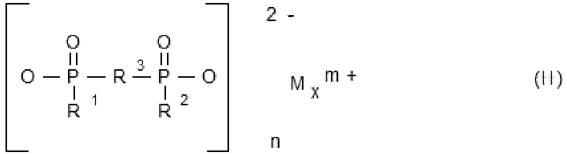 worin
R¹, R² gleich oder verschieden sind und C₁-C₆-Alkyl, linear oder verzweigt:
R³ C₁-C₁₀-Alkylen, linear oder verzweigt, C₆-C₁₀-Arylen, C₇-C₂₀-Alkylarylen oder C₇-C₂₀-Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4
bedeuten,
als Komponente C 1 bis 20 Gew.-% eines Salzes der phosphorigen Säure
als Komponente D 1 bis 50 Gew.-% Füll- oder Verstärkungsstoff,
als Komponente E 0 bis 2 Gew.-% eines Carboxyl(ester)amids,
als Komponente F 0 bis 1 Gew.-% eines Phosphonits oder einer Mischung aus einem Phosphonit und einem Phosphit und
als Komponente G 0 bis 1 Gew.-% eines Esters oder Salzes von langkettigen aliphatischen Carbonsäuren (Fettsäuren), die Kettenlängen von C₁₄ bis C₄₀ aufweisen, wobei die Summe der Komponenten immer 100 Gew.-% beträgt.

2. Flammhemmende Polyamidzusammensetzung nach Anspruch 1, enthaltend
15 bis 91,9 Gew.-% Komponente A,
5 bis 20 Gew.-% Komponente B,
2 bis 10 Gew.-% Komponente C,
1 bis 50 Gew.-% Komponente D
0 bis 2 Gew.-% Komponente E,
0 bis 1 Gew.-% Komponente F und
0,1 bis 1 Gew.-% Komponente G.

3. Flammhemmende Polyamidzusammensetzung nach Anspruch 1 oder 2, enthaltend
16 bis 91,8 Gew.-% Komponente A,
5 bis 20 Gew.-% Komponente B,
2 bis 10 Gew.-% Komponente C,
1 bis 50 Gew.-% Komponente D
0 bis 2 Gew.-% Komponente E,
0,1 bis 1 Gew.-% Komponente F und
0,1 bis 1 Gew.% Komponente G.

4. Flammhemmende Polyamidzusammensetzung nach einem oder mehreren der Ansprüche 1 bis 3, enthaltend
16 bis 82,7 Gew.-% Komponente A,
5 bis 20 Gew.-% Komponente B,
2 bis 10 Gew.-% Komponente C,
10 bis 50 Gew.-% Komponente D
0,1 bis 2 Gew.-% Komponente E,
0,1 bis 1 Gew.-% Komponente F und
0,1 bis 1 Gew.% Komponente G.

5. Flammhemmende Polyamidzusammensetzung nach einem oder mehreren der Ansprüche 1 bis 4, enthaltend
26 bis 72,7 Gew.-% Komponente A,
5 bis 20 Gew.-% Komponente B,
2 bis 10 Gew.-% Komponente C,
20 bis 40 Gew.-% Komponente D
0,1 bis 2 Gew.-% Komponente E,
0,1 bis 1 Gew.-% Komponente F und
0,1 bis 1 Gew.% Komponente G.

6. Flammhemmende Polyamidzusammensetzung nach einem oder mehreren der Ansprüche 1 bis 5, **dadurch gekennzeichnet, dass** die Komponente A ein Polyamid-Blend ist, der aus Polyamiden (PA) ausgewählt ist aus der Gruppe bestehend aus PA 6, PA 6,6, PA 4,6, PA 12, PA 6,10, PA 6T/66, PA 6T/6, PA 4T, PA 9T, PA 10T oder Polyamid-Copolymeren.

7. Flammhemmende Polyamidzusammensetzung nach einem oder mehreren der Ansprüche 1 bis 6, **dadurch gekennzeichnet, dass** es sich bei Komponente A um Polymer Blends aus Polyamid 66 und Polyamid 6 handelt.

8. Flammhemmende Polyamidzusammensetzung nach einem oder mehreren der Ansprüche 1 bis 7, **dadurch gekennzeichnet, dass** die Komponente A zu mindestens 75 Gew.-% aus Polyamid 66 und höchstens 25 Gew.-% aus Polyamid 6 besteht.

9. Flammhemmende Polyamidzusammensetzung nach einem oder mehreren der Ansprüche 1 bis 6, **dadurch gekennzeichnet, dass** es sich um einen Blend aus Polyamid 66 und einem amorphen, teilaromatischen Polyamid handelt.

10. Flammhemmende Polyamidzusammensetzung nach einem oder mehreren der Ansprüche 1 bis 9, **dadurch gekennzeichnet, dass** bei der Komponente B R¹, R² gleich oder verschieden sind und Methyl, Ethyl, n-Propyl, iso-Propyl, n-Butyl, tert.-Butyl oder n-Pentyl bedeuten.

11. Flammhemmende Polyamidzusammensetzung nach einem oder mehreren der Ansprüche 1 bis 10 , **dadurch gekennzeichnet, dass** bei der Komponente B R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen bedeutet.

12. Flammhemmende Polyamidzusammensetzung nach einem oder mehreren der Ansprüche 1 bis 11, **dadurch gekennzeichnet, dass** es sich bei dem Salz der phosphorigen Säure (Komponente C) um Aluminiumphosphit [Al(H₂PO₃)₃], sekundäres Aluminiumphosphit [Al₂(HPO₃)₃], basisches Aluminiumphosphit [Al(OH)(H₂PO₃)₂*2aq], Aluminiumphosphittetrahydrat [Al₂(HPO₃)₃*4aq], Aluminiumphosphonat, Al₇(HPO₃)₉(OH)₆(1,6-Hexandiamin)_{1,5}*12H₂O, Al₂(HPO₃)₃*xAl₂O₃*nH₂O mit x = 2,27 - 1 und/oder Al₄H₆P₁₆O₁₈ handelt.

13. Flammhemmende Polyamidzusammensetzung nach einem oder mehreren der Ansprüche 1 bis 11, **dadurch gekennzeichnet, dass** es sich bei dem bei dem Salz der phosphorigen Säure um Aluminiumphosphit der Formeln (1), (2) und/oder (3) handelt, wobei
Formel (1) Al₂(HPO₃)₃x (H₂O)_{q} umfasst und q 0 bis 4 bedeutet,
Formel (2) Al_{2,00}M_{z}(HPO₃)_{y}(OH)ᵥ x (H₂O)_{w} umfasst und M Alkalimetallionen, z 0,01 bis 1,5 und y 2,63 bis 3,5 und v 0 bis 2 und w 0 bis 4 bedeutet;
Formel (3) Al_{2,00}(HPO₃)ᵤ(H₂PO₃)ₜ x (H₂O)s umfasst und u 2 bis 2,99 und t 2 bis 0,01 und s 0 bis 4 bedeutet
und/oder es sich um Mischungen von Aluminiumphosphit der Formel (1) mit schwerlöslichen Aluminiumsalzen und stickstofffreien Fremdionen, um Mischungen von Aluminiumphosphit der Formel (3) mit Aluminiumsalzen, um Aluminiumphosphit [Al(H2PO₃)₃], um sekundäres Aluminiumphosphit [Al₂(HPO₃)₃], um basisches Aluminiumphosphit [Al(OH)(H₂PO₃)₂*2aq], um Aluminiumphosphittetrahydrat [Al₂(HPO₃)₃*4aq],um Aluminiumphosphonat, um Al₇(HPO₃)₉(OH)₆(1,6-Hexandiamin)_{1,5}*12H₂O, um Al₂(HPO₃)₃*xAl₂O₃*nH₂O mit x = 2,27 - 1 und/oder Al₄H₆P₁₆O₁₈ handelt.

14. Flammhemmende Polyamidzusammensetzung nach einem oder mehreren der Ansprüche 1 bis 13, **dadurch gekennzeichnet, dass** es sich bei dem verstärkenden Füllstoff um Glasfasern handelt.

15. Flammhemmende Polyamidzusammensetzung nach einem oder mehreren der Ansprüche 1 bis 14, **dadurch gekennzeichnet, dass** es sich bei der Komponente E um ein Derivat eines aromatischen Di- oder Tri-carboxyl(ester)amids handelt.

16. Flammhemmende Polyamidzusammensetzung nach einem oder mehreren der Ansprüche 1 bis 15, **dadurch gekennzeichnet, dass** es sich bei Komponente E um N,N'-bis-piperdinyl-1,3-benzoldicarboxamid und/oder N,N'-bis(2,2,6,6-tetramethyl-4-piperdinyl)-1,3-benzoldicarboxamid handelt.

17. Flammhemmende Polyamidzusammensetzung nach einem oder mehreren der Ansprüche 1 bis 16, **dadurch gekennzeichnet, dass** es sich bei den Phosphoniten (Komponente F) um solche der allgemeinen Struktur
R-[P(OR₁)₂]ₘ (IV)
handelt, wobei
R ein ein- oder mehrwertiger aliphatischer, aromatischer oder heteroaromatischer organischer Rest ist und
R₁ eine Verbindung der Struktur (V) 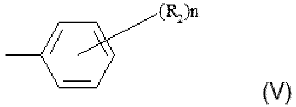
ist oder die beiden Reste R₁ eine verbrückende Gruppe der Struktur (VI) bilden 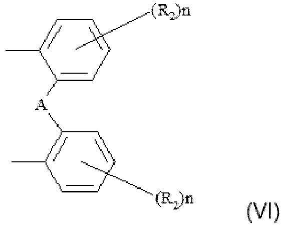 mit
A direkter Bindung, O, S, C₁-C₁₈-Alkylen (linear oder verzweigt), C₁-C₁₈-Alkyliden (linear oder verzweigt), in denen
R₂ unabhängig voneinander C₁-C₁₂-Alkyl (linear oder verzweigt), C₁-C₁₂-Alkoxy und/oder C₅-C₁₂-Cycloalkyl bedeuten und n 0 bis 5 sowie m 1 bis 4 bedeutet.

18. Flammhemmende Polyamidzusammensetzung nach einem oder mehreren der Ansprüche 1 bis 17, **dadurch gekennzeichnet, dass** es sich bei der Komponente G um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit handelt.

19. Verfahren zur Herstellung von flammgeschützten Polymer-Formkörpern, **dadurch gekennzeichnet, dass** flammhemmende Polyamidzusammensetzungen nach einem der Ansprüche 1 bis 18 durch Spritzgießen, insbesondere durch Schaumspritzgießen, durch Gasinnendruck-Spritzgießen, oder durch Pressen, Blasformen, Foliengießen, Kalandern , Laminieren oder Beschichten bei höheren Temperaturen zum flammgeschützten Polymer-Formkörper verarbeitet werden.

20. Ein dreidimensionaler Artikel umfassend die Polyamidzusammensetzung nach einem oder mehreren der Ansprüche 1 bis 18, **dadurch gekennzeichnet, dass** es sich hierbei um Formkörper, insbesondere um Spritzgussteile, Extrusionsmassen und -teile handelt.

## Claims

1. Flame-retardant polyamide composition comprising
as component A from 1 to 96% by weight of a polyamide blend comprising a plurality of thermoplastic polyamides, as component B from 2 to 25% by weight of a dialkylphosphinic salt of the formula (I) and/or of a diphosphinic salt of the formula (II) and/or polymers of these, 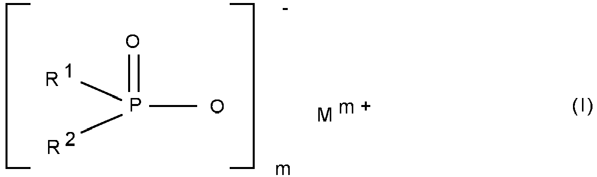 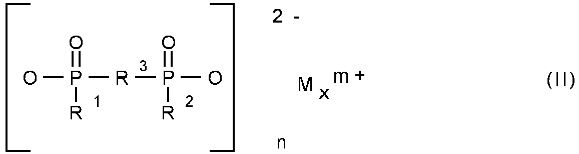 in which
R¹ and R² are identical or different and are C₁-C₆-alkyl, linear or branched;
R³ is C₁-C₁₀-alkylene, linear or branched, C₆-C₁₀-arylene, C₇-C₂₀-alkylarylene, or C₇-C₂₀-arylalkylene;
M is Mg, Ca, Al, Sb, Sn, Ge, Ti, Zn, Fe, Zr, Ce, Bi, Sr, Mn, Li, Na, K, and/or a protonated nitrogen base;
m is from 1 to 4;
n is from 1 to 4;
x is from 1 to 4,
as component C from 1 to 20% by weight of a salt of phosphorous acid,
as component D from 1 to 50% by weight of filler or reinforcing material,
as component E from 0 to 2% by weight of a carboxylic (ester) amide,
as component F from 0 to 1% by weight of a phosphonite or of a mixture of a phosphonite and a phosphite, and
as component G from 0 to 1% by weight of an ester or salt of long-chain aliphatic carboxylic acids (fatty acids) which have chain lengths of from C₁₄ to C₄₀, where the entirety of the components is always 100% by weight.

2. Flame-retardant polyamide composition according to Claim 1, comprising
from 15 to 91.9% by weight of component A,
from 5 to 20% by weight of component B,
from 2 to 10% by weight of component C,
from 1 to 50% by weight of component D,
from 0 to 2% by weight of component E,
from 0 to 1% by weight of component F, and
from 0.1 to 1% by weight of component G.

3. Flame-retardant polyamide composition according to Claim 1 or 2, comprising
from 16 to 91.8% by weight of component A,
from 5 to 20% by weight of component B,
from 2 to 10% by weight of component C,
from 1 to 50% by weight of component D,
from 0 to 2% by weight of component E,
from 0.1 to 1% by weight of component F, and
from 0.1 to 1% by weight of component G.

4. Flame-retardant polyamide composition according to one or more of Claims 1 to 3, comprising
from 16 to 82.7% by weight of component A,
from 5 to 20% by weight of component B,
from 2 to 10% by weight of component C,
from 10 to 50% by weight of component D,
from 0.1 to 2% by weight of component E,
from 0.1 to 1% by weight of component F, and
from 0.1 to 1% by weight of component G.

5. Flame-retardant polyamide composition according to one or more of Claims 1 to 4, comprising
from 26 to 72.7% by weight of component A,
from 5 to 20% by weight of component B,
from 2 to 10% by weight of component C,
from 20 to 40% by weight of component D,
from 0.1 to 2% by weight of component E,
from 0.1 to 1% by weight of component F, and
from 0.1 to 1% by weight of component G.

6. Flame-retardant polyamide composition according to one or more of Claims 1 to 5, **characterized in that** component A is a polyamide blend selected from polyamides (PA) selected from the group consisting of PA 6, PA 6,6, PA 4,6, PA 12, PA 6,10, PA 6T/66, PA 6T/6, PA 4T, PA 9T, PA 10T and polyamide copolymers.

7. Flame-retardant polyamide composition according to one or more of Claims 1 to 6, **characterized in that** component A is a polymer blend made of nylon-6,6 and nylon-6.

8. Flame-retardant polyamide composition according to one or more of Claims 1 to 7, **characterized in that** component A is composed of at least 75% by weight of nylon-6,6 and at most 25% by weight of nylon-6.

9. Flame-retardant polyamide composition according to one or more of Claims 1 to 6, **characterized in that** said composition is a blend of nylon-6,6 and of an amorphous, semiaromatic polyamide.

10. Flame-retardant polyamide composition according to one or more of Claims 1 to 9, **characterized in that** in the case of component B R¹ and R² are identical or different and are methyl, ethyl, n-propyl, isopropyl, n-butyl, tert-butyl or n-pentyl.

11. Flame-retardant polyamide composition according to one or more of Claims 1 to 10, **characterized in that** in the case of component B R³ is methylene, ethylene, n-propylene, isopropylene, n-butylene, tert-butylene, n-pentylene, n-octylene, or n-dodecylene; phenylene, or naphthylene; methylphenylene, ethylphenylene, tert-butylphenylene, methylnaphthylene, ethylnaphthylene, or tert-butylnaphthylene; phenylmethylene, phenylethylene, phenylpropylene or phenylbutylene.

12. Flame-retardant polyamide composition according to one or more of Claims 1 to 11, **characterized in that** the salt of phosphorous acid (component C) is aluminum phosphite [Al(H₂PO₃)₃], secondary aluminum phosphite [Al₂(HPO₃)₃], basic aluminum phosphite [Al(OH)(H₂PO₃)₂*2aq], aluminum phosphite tetrahydrate [Al₂(HPO₃)₃*4aq], aluminum phosphonate, Al₇(HPO₃)₉(OH)₆(1,6-hexanediamine)_{1.5}*12H₂O, Al₂(HPO₃)₃*xAl₂O₃*nH₂O, where x = 2.27 - 1, and/or Al₄H₆P₁₆O₁₈.

13. Flame-retardant polyamide composition according to one or more of Claims 1 to 11, **characterized in that** the salt of phosphorous acid is aluminum phosphite of the formulae (1), (2), and/or (3), where
formula (1) comprises Al₂(HPO₃)₃ x (H₂O)_{q}, and q is from 0 to 4,
formula (2) comprises Al_{2.00}M_{z}(HPO₃)_{y}(OH)ᵥ x (H₂O)_{w}, and M is alkali metal ions,
z is from 0.01 to 1.5, and y is from 2.63 to 3.5, and v is from 0 to 2, and w is from 0 to 4;
formula (3) comprises Al_{2.00}(HPO₃)ᵤ(H₂PO₃)ₜ x (H₂O)s, and u is from 2 to 2.99, and t is from 2 to 0.01, and s is from 0 to 4,
and/or is a mixture of aluminum phosphite of the formula (1) with sparingly soluble aluminum salts and with foreign nitrogen-free ions, a mixture of aluminum phosphite of the formula (3) with aluminum salts, or is aluminum phosphite [Al(H₂PO₃)₃], secondary aluminum phosphite [Al₂(HPO₃)₃], basic aluminum phosphite [Al(OH)(H₂PO₃)₂*2aq], aluminum phosphite tetrahydrate [Al₂(HPO₃)₃*4aq], aluminum phosphonate, Al₇(HPO₃)₉(OH)₆(1,6-hexanediamine)_{1.5}^{∗}12H₂O, Al₂(HPO₃)₃^{∗}xAl₂O₃^{∗}nH₂O, where x = 2.27 - 1, and/or Al₄H₆P₁₆O₁₈.

14. Flame-retardant polyamide composition according to one or more of Claims 1 to 13, **characterized in that** the reinforcing filler is glass fibers.

15. Flame-retardant polyamide composition according to one or more of Claims 1 to 14, **characterized in that** component E is a derivative of an aromatic di- or tricarboxylic (ester) amide.

16. Flame-retardant polyamide composition according to one or more of Claims 1 to 15, **characterized in that** component E is N,N'-bispiperidinyl-1,3-benzenedicarboxamide and/or N,N'-bis(2,2,6,6-tetramethyl-4-piperidinyl)-1,3-benzenedicarboxamide.

17. Flame-retardant polyamide composition according to one or more of Claims 1 to 16, **characterized in that** the phosphonites (component F) are those of the general structure
R-[P(OR₁)₂]ₘ (IV)
where
R is a mono- or polyvalent aliphatic, aromatic, or heteroaromatic organic moiety, and
R₁ is a system of the structure (V) 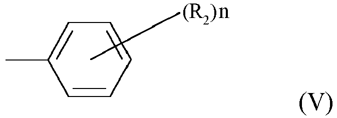
or the two moieties R₁ form a bridging group of the structure (VI) 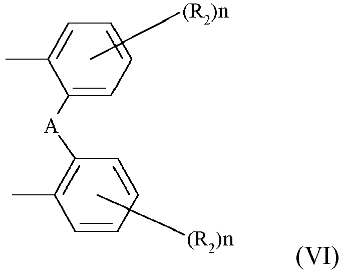 where
A is a direct bond, O, S, C₁-C₁₈-alkylene (linear or branched), C₁-C₁₈-alkylidene (linear or branched), in which
R₂ is mutually independently C₁-C₁₂-alkyl (linear or branched), C₁-C₁₂-alkoxy and/or C₅-C₁₂-cycloalkyl, and n is from 0 to 5, and m is from 1 to 4.

18. Flame-retardant polyamide composition according to one or more of Claims 1 to 17, **characterized in that** component G is alkali metal salts, alkaline earth metal salts, aluminum salts, and/or zinc salts of long-chain fatty acids having from 14 to 40 carbon atoms, and/or is reaction products of long-chain fatty acids having from 14 to 40 carbon atoms with polyhydric alcohols, for example ethylene glycol, glycerol, trimethylolpropane, and/or pentaerythritol.

19. Process for the production of flame-retardant polymer moldings, **characterized in that** flame-retardant polyamide compositions according to any of Claims 1 to 18 are processed via injection molding, in particular via foam injection molding, via internal-gas-pressure injection molding, or via pressing, blow molding, film casting, calendering, lamination, or coating at relatively high temperatures to give the flame-retardant polymer molding.

20. Three-dimensional item comprising the polyamide composition according to one or more of Claims 1 to 18, **characterized in that** said item is a molding, in particular an injection-molded part, extruded composition, or extruded part.

## Revendications

1. Composition ignifuge de polyamide, contenant comme composant A 1 à 96% en poids d'un mélange de polyamide, contenant plusieurs polyamides thermoplastiques, comme composant B 2 à 25% en poids d'un sel de l'acide dialkylphosphinique de formule (I) et/ou d'un sel de l'acide diphosphinique de formule (II) et/ou de leurs polymères, 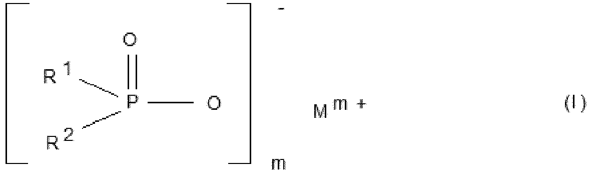 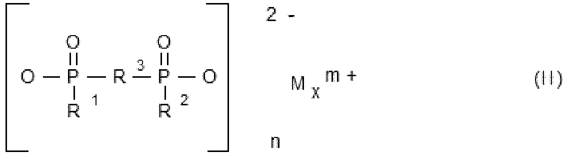 dans lesquelles
R¹, R² sont identiques ou différents et signifient C₁-C₆-alkyle, linéaire ou ramifié ;
R³ signifie C₁-C₁₀-alkylène, linéaire ou ramifié, C₆-C₁₀-arylène, C₇-C₂₀-alkylarylène ou C₇-C₂₀-arylalkylène ;
M signifie Mg, Ca, Al, Sb, Sn, Ge, Ti, Zn, Fe, Zr, Ce, Bi, Sr, Mn, Li, Na, K et/ou une base azotée protonée ;
m vaut 1 à 4 ;
n vaut 1 à 4 ;
x vaut 1 à 4
- comme composant C 1 à 20% en poids d'un sel de l'acide phosphoreux
- comme composant D 1 à 50% en poids de charge ou de substance de renforcement,
- comme composant E 0 à 2% en poids d'un carboxyl(ester)amide,
- comme composant F 0 à 1% en poids d'un phosphinite ou d'un mélange d'un phosphonite et d'un phosphite et
- comme composant G 0 à 1% en poids d'un ester ou d'un sel d'acides carboxyliques aliphatiques à longue chaîne (acides gras), qui présentent des longueurs de chaîne de C₁₄ à C₄₀, la somme des composants valant toujours 100% en poids.

2. Composition ignifuge de polyamide selon la revendication 1, contenant
15 à 91,9% en poids de composant A,
5 à 20% en poids de composant B,
2 à 10% en poids de composant C,
1 à 50% en poids de composant D,
0 à 2% en poids de composant E,
0 à 1% en poids de composant F et
0,1 à 1% en poids de composant G.

3. Composition ignifuge de polyamide selon la revendication 1 ou 2, contenant
16 à 91,8% en poids en poids de composant A,
5 à 20% en poids de composant B,
2 à 10% en poids de composant C,
1 à 50% en poids de composant D,
0 à 2% en poids de composant E,
0,1 à 1% en poids de composant F et
0,1 à 1% en poids de composant G.

4. Composition ignifuge de polyamide selon l'une ou plusieurs des revendications 1 à 3, contenant
16 à 82,7% en poids de composant A,
5 à 20% en poids de composant B,
2 à 10% en poids de composant C,
10 à 50% en poids de composant D,
0,1 à 2% en poids de composant E,
0,1 à 1% en poids de composant F et
0,1 à 1% en poids de composant G.

5. Composition ignifuge de polyamide selon l'une ou plusieurs des revendications 1 à 4, contenant
26 à 72,7% en poids de composant A,
5 à 20% en poids de composant B,
2 à 10% en poids de composant C,
20 à 40% en poids de composant D,
0,1 à 2% en poids de composant E,
0,1 à 1% en poids de composant F et
0,1 à 1% en poids de composant G.

6. Composition ignifuge de polyamide selon l'une ou plusieurs des revendications 1 à 5, **caractérisée en ce que** le composant A est un mélange de polyamide qui est choisi parmi les polyamides (PA) du groupe constitué par le PA 6, le PA 6,6, le PA 4,6, le PA 12, le PA 6,10, le PA 6T/66, le PA 6T/6, le PA 4T, le PA 9T, le PA 10T ou les copolymères de polyamide.

7. Composition ignifuge de polyamide selon l'une ou plusieurs des revendications 1 à 6, **caractérisée en ce qu'**il s'agit, pour le composant A, de mélanges polymères de polyamide 66 et de polyamide 6.

8. Composition ignifuge de polyamide selon l'une ou plusieurs des revendications 1 à 7, **caractérisée en ce que** le composant A est constitué par du polyamide 66 à raison d'au moins 75% en poids et par du polyamide 6 à raison d'au plus 25% en poids.

9. Composition ignifuge de polyamide selon l'une ou plusieurs des revendications 1 à 6, **caractérisée en ce qu'**il s'agit d'un mélange de polyamide 66 et d'un polyamide amorphe, partiellement aromatique.

10. Composition ignifuge de polyamide selon l'une ou plusieurs des revendications 1 à 9, **caractérisée en ce que**, dans le composant B, R¹ et R² sont identiques ou différents et signifient méthyle, éthyle, n-propyle, iso-propyle, n-butyle, tert-butyle ou n-pentyle.

11. Composition ignifuge de polyamide selon l'une ou plusieurs des revendications 1 à 10, **caractérisée en ce que** dans le composant B, R³ signifie méthylène, éthylène, n-propylène, isopropylène, n-butylène, tert-butylène, n-pentylène, n-octylène ou n-dodécylène ; phénylène ou naphtylène ; méthylphénylène, éthylphénylène, tert-butylphénylène, méthylnaphtylène, éthylnaphtylène ou tert-butylnaphtylène ; phénylméthylène, phényléthylène, phénylpropylène ou phénylbutylène.

12. Composition ignifuge de polyamide selon l'une ou plusieurs des revendications 1 à 11, **caractérisée en ce qu'**il s'agit, pour le sel de l'acide phosphoreux (composant C), de phosphite d'aluminium [Al(H₂PO₃)₃], de phosphite d'aluminium secondaire [Al₂(HPO₃)₃], de phosphite d'aluminium basique [Al(OH)(H₂PO₃)₂*2aq], de phosphite d'aluminium tétrahydraté [Al₂(HPO₃)₃*4aq], de phosphonate d'aluminium, d'Al₇(HPO₃)₉(OH)₆(1,6-hexanediamine)_{1,5}*12H₂O, d'Al₂(HPO₃)₃*xAl₂O₃*nH₂O avec x = 2,27-1 et/ou d'Al₄H₆P₁₆O₁₈.

13. Composition ignifuge de polyamide selon l'une ou plusieurs des revendications 1 à 11, **caractérisée en ce qu'**il s'agit, pour le sel de l'acide phosphoreux, de phosphite d'aluminium des formules (1), (2) et/ou (3), où
la formule (1) comprend Al₂(HPO₃)₃ x (H₂O)_{q} et q signifie 0 à 4,
la formule (2) comprend Al_{2,00}M_{z}(HPO₃)_{y}(OH)ᵥ x (H₂O)_{w} et M signifie des ions de métal alcalin, z signifie 0,01 à 1,5 et y signifie 2, 63 à 3,5 et v signifie 0 à 2 et w signifie 0 à 4 ;
la formule (3) comprend Al_{2,00}(HPO₃)ᵤ(H₂PO₃)ₜ x (H₂O)ₛ et u signifie 2 à 2,99 et t signifie 2 à 0,01 et s signifie 0 à 4
et/ou il s'agit de mélanges de phosphite d'aluminium de formule (1) avec des sels d'aluminium peu solubles et des ions étrangers exempts d'azote, de mélanges de phosphite d'aluminium de formule (3) avec des sels d'aluminium, de phosphite d'aluminium [Al(H₂PO₃)₃], de phosphite d'aluminium secondaire [Al₂(HPO₃)₃], de phosphite d'aluminium basique [Al(OH)(H₂PO₃)₂*2aq], de phosphite d'aluminium tétrahydraté [Al₂(HPO₃)₃*4aq], de phosphonate d'aluminium, d'Al₇(HPO₃)₉(OH)₆(1,6-hexanediamine)_{1,5}*12H₂O, d'Al₂(HPO₃)₃*xAl₂O₃*nH₂O avec x = 2,27-1 et/ou d'Al₄H₆P₁₆O₁₈.

14. Composition ignifuge de polyamide selon l'une ou plusieurs des revendications 1 à 13, **caractérisée en ce qu'**il s'agit, pour la charge de renforcement, de fibres de verre.

15. Composition ignifuge de polyamide selon l'une ou plusieurs des revendications 1 à 14, **caractérisée en ce qu'**il s'agit, pour le composant E, d'un dérivé d'un dicarboxyl(ester)amide ou tricarboxyl(ester)amide aromatique.

16. Composition ignifuge de polyamide selon l'une ou plusieurs des revendications 1 à 15, **caractérisée en ce qu'**il s'agit, pour le composant E, de N,N'-bis-piperidinyl-1,3-benzènedicarboxamide et/ou de N,N'-bis-(2,2,6,6-tétraméthyl-4-piperidinyl)-1,3-benzènedicarboxamide.

17. Composition ignifuge de polyamide selon l'une ou plusieurs des revendications 1 à 16, **caractérisée en ce qu'**il s'agit, pour les phosphonites (composant F), de ceux de structure générale
R-[P(OR₁)₂]ₘ (IV)
où
R représente un radical organique monovalent ou polyvalent, aliphatique, aromatique ou hétéroaromatique et
R₁ représente un composé de structure (V) 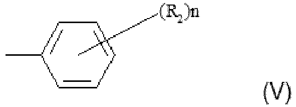 ou les deux radicaux R₁ forment un groupe pontant de structure (VI) 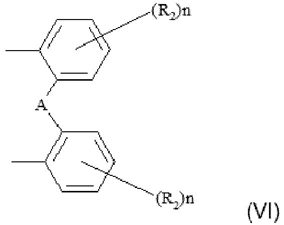 dans laquelle
A représente une liaison directe, O, S, C₁-C₁₈-alkylène (linéaire ou ramifié), C₁-C₁₈-alkylidéne (linéaire ou ramifié), dans lesquels
R² représente, indépendamment, C₁-C₁₂-alkyle (linéaire ou ramifié), C₁-C₁₂-alcoxy et/ou C₅-C₁₂-cycloalkyle et n signifie 0 à 5 et m signifie 1 à 4.

18. Composition ignifuge de polyamide selon l'une ou plusieurs des revendications 1 à 17, **caractérisée en ce qu'**il s'agit, pour le composant G, de sels de métal alcalin, alcalino-terreux, d'aluminium et/ou de zinc d'acides gras à longue chaîne comprenant 14 à 40 atomes de carbone et/ou de produits de transformation d'acides gras à longue chaîne comprenant 14 à 40 atomes de carbone avec des alcools polyvalents, tels que l'éthylèneglycol, le glycérol, le triméthylolpropane et/ou le pentaérythritol.

19. Procédé pour la fabrication de corps moulés polymères ignifugés, **caractérisé en ce que** des compositions ignifuges de polyamide selon l'une quelconque des revendications 1 à 18 sont transformées par moulage par injection, en particulier par moulage par injection de mousse, par moulage par injection à pression interne gazeuse ou par pressage, moulage par soufflage, coulée de feuilles, calandrage, laminage ou revêtement à des températures élevées en corps moulés polymères ignifugés.

20. Article tridimensionnel comprenant la composition de polyamide selon l'une ou plusieurs des revendications 1 à 18, **caractérisé en ce qu'**il s'agit de corps moulés, en particulier de pièces moulées par injection, de masses extrudées et de pièces extrudées.
